# EUROPEAN PATENT APPLICATION

(11) **EP 2 190 064 A1**
(43) Date of publication of application: **26.05.2010**
(21) Application number: 09252514.6
(22) Date of filing: 29.10.2009
(51) Int. Cl.: H01Q 1/44, H01Q 1/22, G06K 19/077

(54) **Assembling structure of radio IC tag**

(30) Priority: 20.11.2008 JP 2008296407
(71) Applicant: Hitachi Ltd., Chiyoda-ku Tokyo 100-8280 (JP)
(72) Inventor: Sakama, Isao, Chiyoda-ku Tokyo 100-8220 (JP)
(74) Representative: Calderbank, Thomas Roger

(57) **Abstract**

In an assembling structure of a radio IC tag, the radio IC tag includes an IC chip for recording information therein and a first antenna connected to the IC chip for wirelessly transmitting or receiving information. The first antenna has a first gap for performing impedance matching. A conductive second antenna having a second gap is arranged over the IC chip, the first gap, and the first antenna.

## Description

The present invention relates to a radio IC tag which transmits and receives information wirelessly, and, more specifically, to an assembling structure of the radio IC tag concerning a configuration of an antenna for transmitting and receiving information.

Radio IC tags capable of reading and writing information have been widely used for information management or distribution management of various goods in recent years.

Such a radio IC tag is configured to include a small IC chip having a memory for recording information, and a small antenna for wirelessly transmitting the information recorded in the memory and receiving transmitted power or information.

The radio IC tag is equipped with, for example, a tiny IC chip about 0.4 mm in length and width and about 0.1 mm in thickness near the center of the long antenna and can be used by being attached to an article, an animal, or the like. If a user holds a reader/writer over the radio IC tag, information recorded in an IC chip equipped therein is read, thus enabling management of each article, animal, or the like.

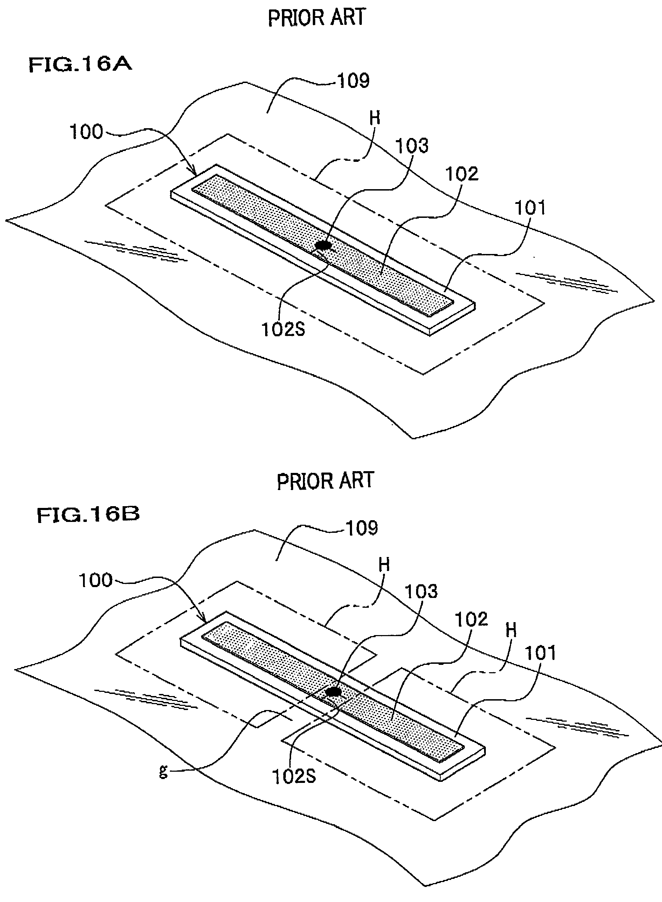

FIG. 16A and FIG. 16B are perspective views each illustrating a configuration of an assembly in which a radio IC tag 100 and a hologram H are attached to a product 109 using a dipole antenna according to the prior art.

The radio IC tag 100 according to the prior art typically has a dipole antenna (see FIG. 16A).

The radio IC tag 100 shown in FIG. 16A includes a dielectric body 101 as a base material, and a radiation conductor (antenna) 102 having a length of λ/2 (one half wavelength) in a longitudinal direction of a surface of the dielectric body 101. The radiation conductor 102 is quipped with an IC chip 103 having a memory for recording information, in the substantial center thereof.

An L-shaped slit 102s for performing impedance matching is formed at the center of the radiation conductor 102.

One end of the 102s extends to one end edge of a long side to separate the long side in a shorter direction of the radiation conductor 102. A connecting terminal (not shown) of the IC chip 103 is connected to the radiation conductor 102 across the slit 102s.

The following is patent documents related to the present Application and is publicly known: Japanese Laid-Open Patent Application, Publication No. 2008-117165; Japanese Laid-Open Patent Application, Publication No. 2005-309811; Japanese Laid-Open Patent Application, Publication No. 2006-311372 (paragraphs 0021 to 0024, FIG. 4); and Japanese Laid-Open Patent Application, Publication No. 2006-25330 (paragraphs 0022 to 0026, FIG. 4).

A hologram attached onto an article has been recently used to discriminate the authentic from its copies and to prevent forgery.

To enhance effects of the forgery prevention, attachment of both a hologram and a radio IC tag onto an article has also been attempted.

For example, such a configuration is considered that a hologram is attached on an article, on which a radio IC tag is attached.

However, the configuration has a problem that designing is not excellent because the radio IC tag attached on the article exposes to outside, and a user easily recognizes the radio IC tag, which is not advantageous.

In light of the above problem, in FIG. 16A, the radio IC tag 100 is placed on a product 109 and is then covered with a hologram H. However, this configuration has a problem that a large difference of an input and output impedance between the radiation conductor (antenna) 102 and the IC chip 103 arises. This makes it impossible to read information recorded in the radio IC tag 100. That is, the radio IC tag does not function suitably.

Due to this, if a distance between the radiation conductor (antenna) 102 and the hologram H is made larger, the radio IC tag will function. However, a seal thickness of the radio IC tag 100 becomes too large to be suitable for practical use.

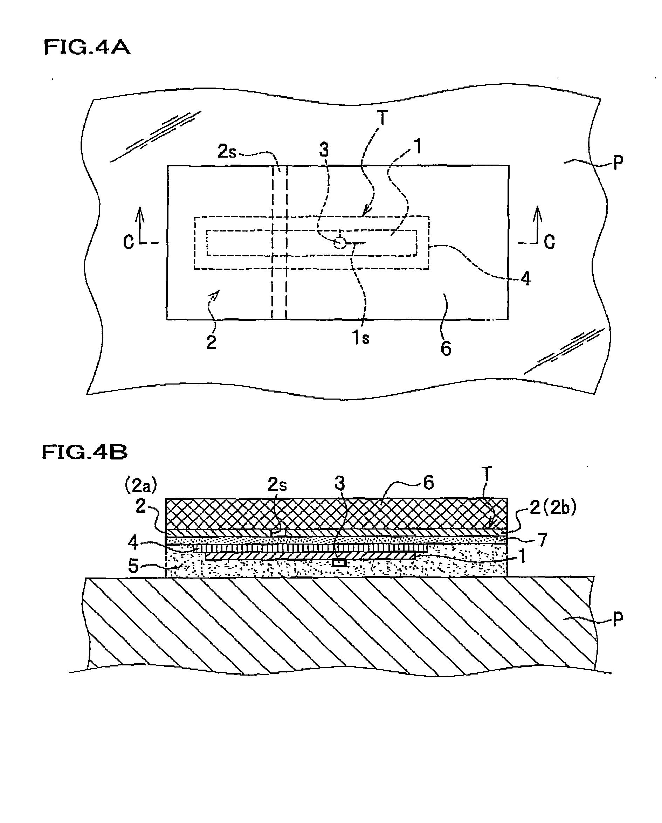

Thus, as shown in FIG. 16B, another configuration is proposed in which a gap g is created in the hologram H, and an IC chip 103 and an L-shaped slit 102s for impedance matching are exposed from the gap g in the hologram H (see FIG. 4 of Japanese Laid-Open Patent Application, Publication No. 2006-25390). However, the configuration has a problem that visual effect and decorative appearance is not excellent because a user can easily recognize the 1C chip 103 of the radio IC tag 100 and the L-shaped slit 102s through the gap g in the hologram H.

The present invention has been made in light of the above problems and in an attempt to provide an assembling structure of a radio of IC tag in which the decorative appearance is improved, freedom of designing is increased, and redesigning is not necessary.

In an assembling structure of a radio IC tag, the radio IC tag includes an IC chip for recording information therein and a first antenna connected to the IC chip for wirelessly transmitting or receiving information. The first antenna has a first gap for performing impedance matching. A conductive second antenna having a second gap is arranged over the IC chip, the first gap, and the first antenna.

Note that the second gap includes a gap which divides the second antenna.

Other features and advantages of the present invention will become more apparent from the following detailed description of the invention, when taken in conjunction with the accompanying exemplary drawings.

### In the drawings:

FIG. 1A is a top view illustrating a radio IC tag T arranged on a product P according to a first embodiment. FIG. 1B is a cross sectional view illustrating the radio IC tag T when cut along the line A-A in FIG. 1A. FIG. IC is a view in the direction of the arrow B in FIG. 1B.

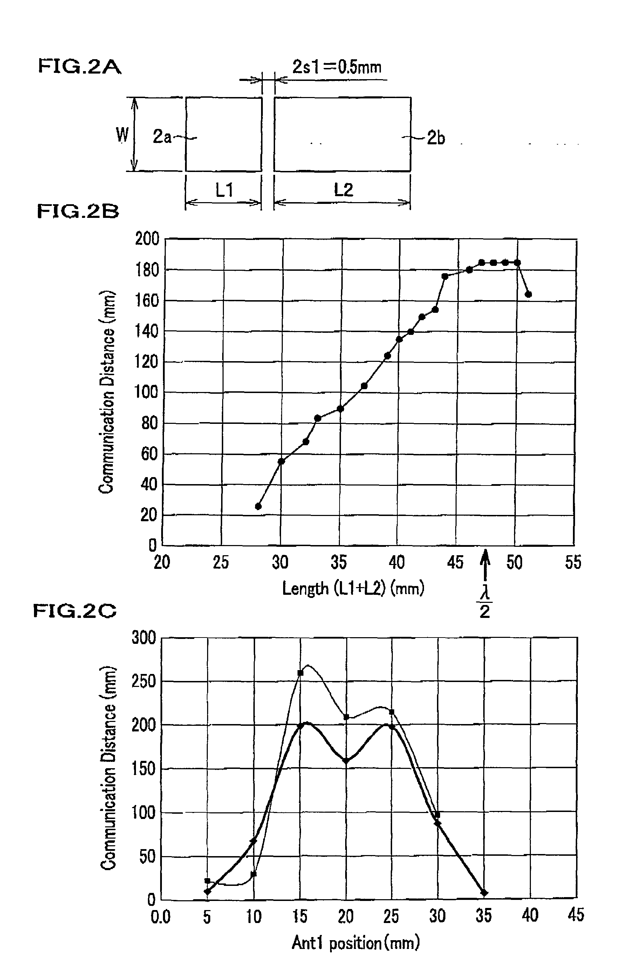

FIG. 2A is a plan view illustrating a second antenna for indicating experimental conditions thereof according to the first embodiment. FIG. 2B is a graph showing a relation between a sum of a length L1 of a second antenna first part 2a plus a length 1.2 of a second antenna second part 2b (corresponding to the horizontal axis) and a communication distance at a radio wave frequency of 2.4 GHz (corresponding to the vertical axis) under the test conditions indicated in FIG. 2A. FIG. 2C is a graph showing a relation between a position of the first antenna 1 relative to the second antenna 2 shifted from an end edge (Antl position = 0) of the second antenna 2 in the longitudinal direction thereof (corresponding to the horizontal axis) and the communication distance at the radio wave frequency of 2.4 GHz (corresponding to the vertical axis).

FIG. 3A is a perspective view illustrating a base material of a hologram in a third method of forming a slot in the hologram according to the first embodiment. FIG. 3B is a view in the direction of the arrow F in FIG. 3A. FIG. 3C is a view illustrating the hologram with a metal film formed on a slant face of the base material shown in FIG. 3B.

FIG. 4A is a top view illustrating an assembling structure of a radio 1C tag according to another example of the first embodiment. FIG. 4B is a cross sectional view when cut along the line C-C in FIG. 4A.

FIG. 5A is a view in the direction of the arrow B in FIG. 1B according to a first variation of the first embodiment. FIG. 5B is a plan view illustrating a second antenna 22 of FIG. 5A.

FIG. 6A is a plan view illustrating a second antenna 22 of the still another example of the first variation according to the first embodiment. FIG. 6B is a view of FIG. 1B in the direction of the arrow B according to the still another example of the first variation of the first embodiment.

FIG. 7A is a view in the direction of the arrow B in FIG. 1B according to a second variation of the first embodiment. FIG. 7B is a plan view illustrating a second antenna of FIG. 7A.

FIG. 8A is a view in the direction of the arrow B in FIG. 1B according to another example of the second variation of the first embodiment. FTG. 8B is a plan view illustrating a second antenna of FIG. 8A.

FIG. 9A is a view in the direction of the arrow B in FIG. 1B according to a second embodiment. FIG. 7B is a plan view illustrating a second antenna of FIG. 9A.

FIG. 10 is a view in the direction of the arrow B in FIG. 1B according to a first variation of the second embodiment.

FIG. 11 is a view in the direction of the arrow B in FIG. 1B according to a second variation of the second embodiment.

FIG. 12A is a view in the direction of the arrow B in FIG. 1B according to a third embodiment. FIG. 12B is a plan view illustrating a second antenna of FIG. 12A.

FIG. 13A is a view in the direction of the arrow B in FIG. 1B according to a first variation of the third embodiment. FIG. 13B is a plan view illustrating a second antenna of FIG. 13A.

FIG. 14A is a perspective view illustrating an IC chip medium with a radio IC tag 9T embedded therein according to a fourth embodiment. FIG. 14B is a cross sectional view when cut along the line D-D in FIG. 14A.

FIG. 15A is a perspective view illustrating another IC chip medium with the radio IC tag shown in FIG. 14A embedded therein and with a hologram as a second antenna disposed vertically facing the IC chip medium. FIG. 15B is a cross sectional view when cut along the line E-E in FIG. 15A.

FIG. 16A and FIG. 16B are perspective views each illustrating an assembly in which a radio IC tag using a dipole antenna and a hologram are attached to a product according to the prior art.

### DETAILED DESCRIPTION OF THE EXEMPLARY EMBODIMENT

Embodiments of the present invention are described next in detail with reference to the related drawings.

### <<First Embodiment>>

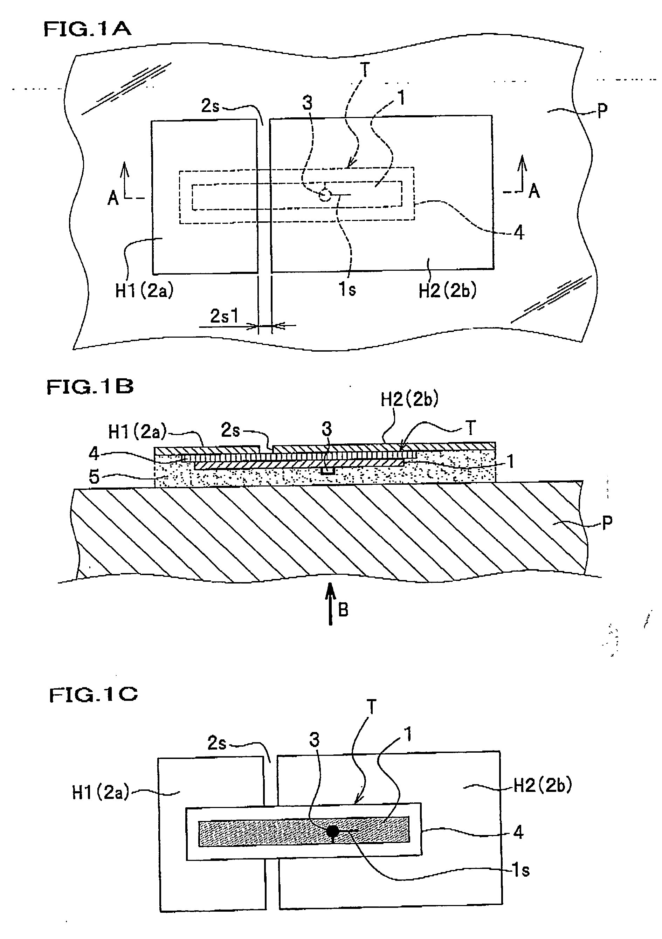

FIG. 1A is a top view illustrating a radio IC tag T according to a first embodiment of the present invention. In FIG. 1A, the radio IC tag T is arranged on a product P (indicated with dashed lines in FIG. 1B). FIG. 1B is a cross-sectional view when cut along the line A-A in FIG. 1A. FIG. 1C is a view in the direction of the arrow B in FIG. 1B.

### <Outline of Radio IC Tag T>

The radio IC tag T according to the first embodiment is attached to a product P so as to discriminate the authentic from copies of the product P by reading information recorded in the radio IC tag T using a reader/writer (not shown).

The radio IC tag T illustrated in FIGS. 1A to 1C is equipped with an IC chip 3 on a side nearer to the product P, rather than to a hologram H (see FIG. 1B).

That is, the hologram H (which may collectively represent a hologram first part H1 and a hologram second part H2, and which may also be referred to as a second antenna to be described later) for enhancing decorative appearance and forgery preventive property of the product P thereon (shown on an upper side of FIG. 1B) is mounted on the radio IC tag T attached to the product P. In other words, a user actually sees the hologram H when the user sees the product P because it is the hologram H that is positioned at an outermost of the product P.

In FIG. 1A, a metal evaporated film of the hologram H (H1, H2) is positioned on the side nearest to the user (an upper side with respect to the plane of FIG. 1A) . The user recognizes the metal evaporated film as hologram patterns.

The metal evaporated film of the hologram H (H1, H2) is electrically conductive and operates as a second antenna 2 of the radio IC tag T to be described later.

The assembling structure of the radio IC tag T includes an arrangement of the hologram first and second parts H1, H2 (which operate as second antennas 2a, 2b, which may be collectively referred to as a second antenna 2) above a first antenna 1 for transmitting and receiving information recorded in the radio IC tag T, and an arrangement of the IC chip 3 of the radio IC tag T and a L-shaped slit ls (as an impedance matching circuit) of the first antenna 1 without being placed vertically above a slot 2s between the holograms H1 (2a) and H2 (2b).

The assembling structure ensures a reliable read of information recorded in the radio IC tag T read by a reader/writer. Further, the assembling structure allows to improve ornamental design of the hologram H without damaging its decorative appearance because the IC chip 3 and the L-shaped slit 1s of the first antenna 1 do not expose from the slot 2s between the holograms H1, H2.

### <Radio IC Tag T>

The radio IC tag T includes: the IC chip 3 for recording information to be read by a reader/writer; the first antenna 1 with the IC chip 3 connected to a substantially central portion thereof via an electrode; and an insulating base material 4 with the first antenna 1 having the IC chip 3 equipped therewith.

The first antenna 1 is a dipole antenna and has the L-shaped slit 1s for impedance matching at the central portion thereof.

One end of the L-shaped slit 1s extends to one of the two end edges in a longitudinal direction of the first antenna 1 to separate one end edge in the longitudinal direction of the first antenna 1. Two electrodes (not shown) of the IC chip 3 are connected to the first antenna 1 across the one end of the L-shaped slit 1s.

The L-shaped slit 1s is not limited to be L-shaped and may be T-shaped as far as such a slit can perform impedance matching.

The IC chip 3 of the radio IC tag T includes, for example:
a limiter circuit for protecting the IC chip 3 from input voltage from the first antenna 1; a rectifier circuit for converting alternating current inputted to the first antenna 1 into direct current; a demodulating circuit for demodulating a command or a data transmitted from a reader/writer (not shown) into a signal sequence constituted of "1" and "0"; a modulation circuit for modulating a carrier wave with a data transmitted to the reader/writer; a control circuit for controlling transmission and receipt of information, read and write in an internal memory, or the like; and a memory for recording information.

The first antenna 1 of the radio IC tag T is formed by, for example, etching copper or aluminum on the base material 4 made of a PET (Polyethylene Terephthalate) film or the like, or printing a conductive paste such as silver.

With the configuration described above, information stored in the radio IC tag T is wirelessly read or recorded in the memory of the radio IC tag T, using a reader/writer (not shown) via the first antenna 1.

### <Second Antenna 2 (2a, 2b)>

As shown in FIGS. 1A to 1C, the hologram H (H1, H2) is arranged adjacent to the base material 4 of the radio IC tag T attached to the product P.

The hologram H is divided into the hologram first part H1 and the hologram second part H2 across the slot 2s which is a gap therebetween. The gap opens on both ends in a shorter direction of the hologram H (in the up and down directions with respect to the plane of FIG. 1A).

A width dimension 2s1 of the slot 2s is 100 µm. It is electrically desirable from a viewpoint of a function of an antenna that the dimension 2s1 of the slot 2s is larger. However, the dimension 2s1 as large as 100 µm is sufficient at minimum. Note that the slot 2s of the second antenna 2 is different from the L-shaped slit is of the first antenna 1 in that the slot 2s is a path of electric or magnetic field while the L-shaped slit ls performs impedance matching.

The holograms H1, H2 (second antenna 2) are arranged vertically over the first antenna 1 (see FIG. 1A and FIG. 1B) . The slot 2s between the hologram first and second parts H1, H2 is arranged in a position not vertically over the IC chip 3 and the L-shaped slit 1s of the first antenna 1.

The hologram H is created by, for example, forming irregularities such as embossings and lines on one surface of a base material made of PET or the like and forming a metal evaporated film on the irregularities. This realizes decorative appearance and forgery preventive property which is produced by effects of light interference. Note that the size of the irregularities on the base material are approximately 0- 5 to 2 µm so as to obtain the effects of light interference.

The metal evaporated film is a good conductor of the hologram H, is made of, for example, aluminum (A1), gold (Au), copper (Cu), or the like, and constitutes the second antenna 2 (which may collectively represent a second antenna first part 2a and a second antenna second part 2b to be described in detail hereinafter) of the radio IC tag T.

More specifically, the metal evaporated film of the hologram H1 constitutes the second antenna first part 2a, and the metal evaporated film of the hologram H2 constitutes the second antenna second part 2b.

Note that the second antenna 2 is not limited to the metal evaporated film of the hologram H1 but may be any conductor as long as having conductivity.

### <Operations of Second Antenna 2 (2a, 2b)>

FIGS. 2A to 2C are views illustrating operations of the second antenna 2 (2a, 2b) . FIG. 2A is a plan view illustrating the second antenna 2 (2a, 2b) for indicating experimental conditions of the second antenna 2 (2a, 2b) . FIG. 2B is a graph showing a relation between a sum of a length L1 of the second antenna first part 2a plus a length L2 of the second antenna second part 2b (corresponding to the horizontal axis) and a communication distance at a radio wave frequency of 2.4 GHz (corresponding to the vertical axis) under the test conditions indicated in FIG. 2A. FIG. 2C is a graph showing a relation between a position of the first antenna 1 relative to the second antenna 2 shifted from an end edge (Ant1 position=O) of the second antenna 2 in the longitudinal direction thereof (corresponding to the horizontal axis) and the communication distance at the radio wave frequency of 2.4 GHz (corresponding to the vertical axis).

In the tests of the record antenna 2 represented in FIG. 2B and FIG. 2C, "L1+L2" was taken as a long side (the longitudinal direction) of the second antenna 2; a length W of a short side thereof was 40 mm; and a width 2s1 of the slot 2s was 0.5 mm.

As shown in FIG. 2B, the longest communication distance was obtained when "L1öL2" had a measurement of 1/2 of the wavelength λ at a radio wave frequency of 2.4 GHz.

That is, the second antenna 2 obtains the largest gain at λ/2. It is thus estimated that the second antenna 2 functions as a dipole antenna and is electrically connected to the first antenna 1 with capacitive coupling. In other words, it is estimated that an electric field in the second antenna 2 is transmitted to the first antenna 1 with capacitive coupling. The function is hereinafter referred to as a dipole mode.

FIG. 2C shows communication distances (corresponding to the vertical axis) of the second antenna 2 according to different positions at which the first antenna 1 is attached. The positions are: a portion just beside an end of the long side of the second antenna 2 (an edge in the longitudinal direction thereof), which may also be referred to as "Antl position = 0 (mm)"; the middle in the longitudinal direction of the second antenna 2, which may also be referred to as "Antl position = 20 (mm)"; and a portion just beside the other end of the long side of the second antenna 2 (the other edge in the longitudinal direction thereof), which may also be referred to as "Antl position = 40 (mm). In the tests, similarly to FIG. B, "L1 + L2" was taken as the long side (the longitudinal direction) of the second antenna 2; the length w of the short side thereof was 40 mm; and the width 2s1 of the slot 2s was 0.5 mm.

A so-called slot antenna which has a long rectangular opening (that is, a slot with both ends thereof' closed) at the center of a metal sheet (a measurement in the longitudinal direction = λ/2) has different impedance at its feeding point, according to different feeding positions in the longitudinal direction of the opening. The impedance is higher at a central portion and is lower at a portion close to the both ends in the longitudinal direction of the opening.

This means that if impedance at a feeding position of an antenna matches impedance at a feeder (for example, an IC chip), feeding efficiency to the antenna is increased, thus allowing efficient radio-wave emission. This results in an extension of the communication distance.

FIG. 2C demonstrates that the communication distance (the vertical axis) varies according to the positions at which the first antenna 1 is attached (the horizontal axis).

The communication distance (the vertical axis) varies symmetrical with respect to the positions at which the first antenna 1 is attached. Such a characteristic of the second antenna 2 appears to be similar to a slot antenna.

Nonetheless, the second antenna 2 is different from the slot antenna in that the both ends of the slot 2s thereof are opened. At present, it is an estimation that the second antenna 2 is similar to a slot antenna. Such a function is, however, referred to as a slot mode hereinafter.

### <Technique of Creating Slot 2s of Second Antenna 2>

Next are described techniques of creating the slot 2s of the second antenna 2.

A first technique is, for example, as follows. A metal film made of Al, Au, Cu, or the like is evaporated onto a base material made of PET or the like to prepare the hologram H. At this time, a portion to be made into the slot 2s is masked so as not to be evaporated with the metal film thereon. That is, when a metal evaporated film as a light reflection layer is formed on a base material constituting the hologram H, a portions (on which a metal film is not formed) constituting the slot 2s is masked, thus creating the slot 2s.

The first technique utilizes a so-called mask method in which a portion to be made into a slot is masked when a metal film of the first hologram H is formed.

A second technique is as follows. A metal film is formed on a whole surface of a base material constituting the hologram H. Part of the metal film to be formed into the slot 2s is removed with resist mask.

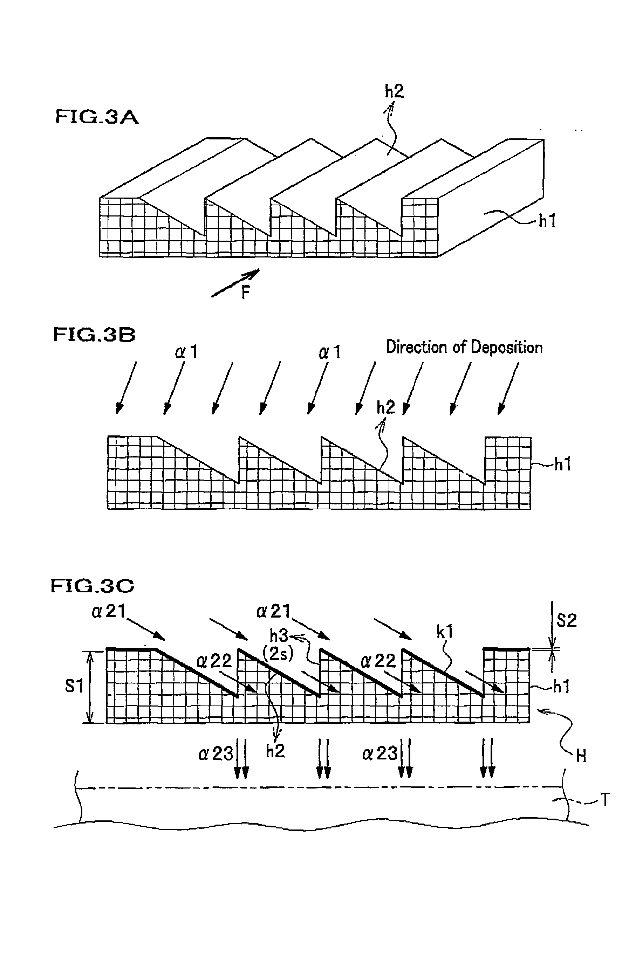

A third technique is shown in FIGS. 3A to 3C. FIG. 3A is a perspective view illustrating a base material h1 of the hologram H. FIG. 3B is a view in the direction of the arrow F in FIG. 3A. FIG. 3C is a view illustrating the hologram H with a metal film kl formed on slant faces h2 of the base material h1 shown in FIG. 3B.

The third method is as follows. A plurality of slant faces h2 are formed on a surface of the base material h1 constituting the hologram H as shown in FIG. 3A.

The base material h1 having a plurality of slant faces h2 is herein made of two roll materials. One roll has a smooth cylindrical surface, and the other has a cylindrical surface with a plurality of slant faces h2.

The two rolls are used to prepare the base material h1 of the hologram H with a plurality of slant faces h2 formed thereon. A thickness s1 of the base material h1 is, for example, 100 µm.

In FIG. 3B, metal such as Al, Au, and Sn is deposited onto the base material h1 having a plurality of slant faces h2 from an oblique direction as shown with arrows α1, using anisotropic deposition such as a sputtering method. In FIG. 3C, the hologram H with the metal film k1 formed on the slant faces h2 of the base material h1 is produced.

A thickness s2 of a light reflection layer (the metal film kl) of the hologram H is 50 to 100 nm and is designed to be in a range between about 10 to about 1000 nm.

As described above, the metal is deposited onto the hologram H from the oblique direction without forming the metal film k1 on vertical portions (metal film non-formation portions h3) of the base material h1. This is advantageous because the slant face h2 is electrically separated from the metal film k1, thus allowing an electric field to pass through the metal film non-formation portions h3.

Thus, if the hologram H having the metal film k1 on the slant faces h2 of the base material h1 is applied to a read of information in the radio IC tag T shown in FIG. 1, radio waves from a reader/writer (not shown) can travel along the metal film kl on the slant faces h2 of the hologram H as shown with arrows α21 of FIG. 3C, pass through the metal film non-formation portions h3 as shown with arrows α23, and further travel toward the first antenna 1 of the radio IC tag T.

In any assembling structures of the radio IC tag T and the second antenna 2, a base material for holding the second antenna 2 is required.

For example, as shown in FIG. 3C, if the second antenna 2 is a reflection layer of the hologram H, the base material h1 (see FIG. 3A) of a hologram seal body of the hologram H is the base material. Irregularities which scatter light are formed on a surface as the second antenna 2 (the metal film kl in FIG. 3C) of the base material h1, which makes the surface function as a hologram seal.

### <Another Example of Assembling Structure of Radio IC Tag T and Second Antenna 2>

Next is described another example of an assembling structure of the radio IC tag T and the second antenna 2 with reference to FIG. 4.

FIGS. 4A and 4B are views each illustrating the radio IC tag T and the second antenna 2 attached onto the product P according to another example of the first embodiment. FIG. 4A is a top view illustrating an assembling structure of the radio 1C tag 2 according to another example of the first embodiment. FIG. 4B is a cross sectional view when cut along the line C-C in FIG. 4A.

The assembling structure of the radio IC tag 2 according to another example of the first embodiment is embodied by assembling the radio IC tag T equipped with the IC chip 3 on the first antenna 1 on the insulating base material 4, to the product P via an adhesive material 5, such that a surface with the TC chip 3 of the radio IC tag T is positioned nearer to the product P, rather than therein the second antenna 2.

FIG. 4A and FIG. 4B show an assembly in which the second antenna 2 divided into the second antenna first part 2a and the second antenna second part 2b by the slot 2s is mounted on a base material 6 made of resin or the like.

The base material 6 on which the second antenna 2 is mounted is made of, for example, PET or PP (polypropylene) and is 10 to 100 µm thick.

A protective layer 7 (see FIG. 4B) protects the second antenna 2 and is an adhesive material or a resin film made of PET, PP, or the like for holding the second antenna 2.

In the assembly, the second antenna 2 is placed over the first antenna 1 of the radio IC tag T attached onto the product P, via the protective layer 7; and the slot 2s of the second antenna 2 is prevented from being positioned vertically over the IC chip 3 and the L-shaped slit 1s of the first antenna 1.

The first antenna 1 may be formed as follows. The second antenna 2 (2a, 2b) is formed on the base material 6. The protective layer 7 as an insulating layer is formed on the second antenna 2. The first antenna 1 is directly printed on the protective layer 7 using conductive paste, such as silver. And, finally, the IC chip 3 is attached onto the first antenna 1.

The printing is performed with appropriate adjustments such that the slot 2s of the second antenna 2 is not positioned vertically over the IC chip 3 and the L-shaped slit 1s of the first antenna 1.

In any assembling structures of the radio IC tag T, a base material for holding the second antenna 2 is required.

For example, as shown in FIGS. 4A and 4B, if the second antenna 2 is a flat metal seal, the base material 6 simply needs to have a function of holding the second antenna 2.

### <Advantages>

With configurations according to the first embodiment, the IC chip 3 of the radio IC tag T and the L-shaped slit 1s as an impedance matching circuit of the first antenna 1 are not exposed to outside. This results in improvement of designing an assembling structure of a radio IC tag with more flexibility in designing.

The IC chip 3 of the radio IC tag T is herein covered with the second antenna 2, which can protect the IC chip 3.

Further, the first antenna 1 and the second antenna 2 are operated in a state where the second antenna 2 is placed vertically over the first antenna 1. This means that an existing type of the second antenna 2 can be used as it is without needs of redesigning or adjustments.

With the configuration shown in FIG. 3C, if a user sees the hologram H, what the user recognizes is mainly a plurality of the slant faces h2 of the hologram H (seen from above with respect to the plane of FIG. 3C) . The user does not recognize the metal film non-formation portions h3 so much. This prevents the slot 2s of the second antenna 2 from being clearly recognized and improves designing.

### <First Variation of First Embodiment>

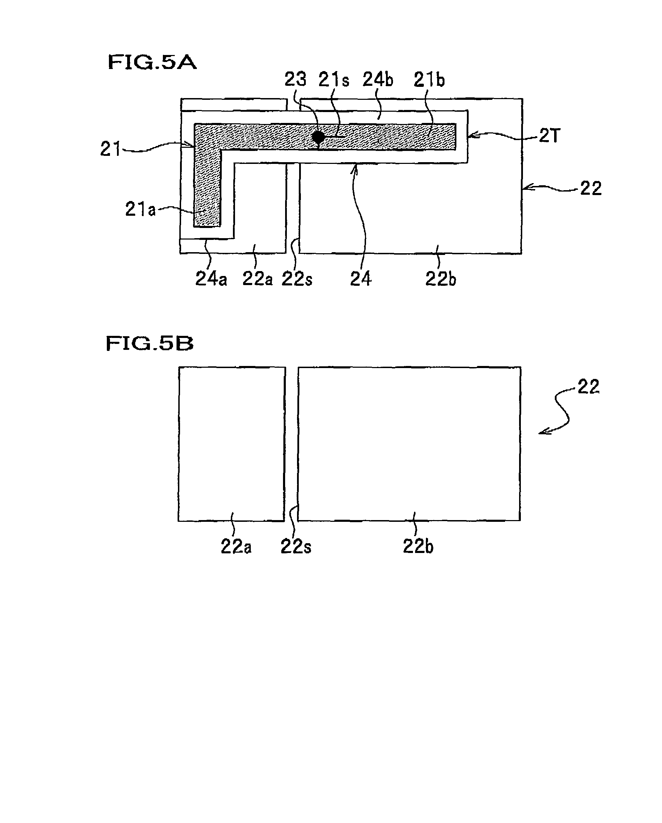

Next is described a first variation of the first embodiment with reference to FIG. 5A and FIG. 5B.

FIG. 5A is a view in the direction of the arrow B in FIG. 1B according to the first variation of the first embodiment. FIG. 5B is a plan view illustrating a second antenna 22 of FIG. 5A.

As shown in FIG. 5A, in the first variation, an area in which a first antenna 21 vertically faces the second antenna 22 is increased so as to increase an electrical junction area therebetween, thus extending a communication distance between a reader/writer (not shown) and a radio IC tag 2T.

Except the above-mentioned, a configuration of the first variation is similar to that of the first embodiment, and its detailed description is omitted herefrom.

As shown in FIG. 5B, the second antenna 22 of the first variation is divided into a second antenna first part 22a and a second antenna second part 22b via a slot 22s, like the second antenna 2 (2a, 2b) of the first embodiment. (see FIG. 1A).

The second antenna first part 22a of the first variation corresponds to the second antenna first part 2a of the first embodiment; the second antenna second part 22b of the first variation, the second antenna second part 2b of the first embodiment; and the slot 22s of the first variation, the slot 2s of the first embodiment.

As shown in FIG. 5A, a base material 24 of the radio IC tag 2T is formed in a substantial L shape including a base material first part 24a facing the second antenna first part 22a and a base material second part 24b facing the second antenna first and second parts 22a, 22b.

Similarly, the first antenna 21 mounted on the base material 24 is formed in a substantial L shape including a first antenna first part 21a mounted on the second antenna first part 22a and a first antenna second part 21b mounted on the second antenna first and second parts 22a, 22b.

Herein, an IC chip 23 of the radio IC tag 2T and an L-shaped slit 21s (an impedance matching circuit) of the first antenna 21 are arranged such that the IC chip 23 and the L-shaped slit 21s are not placed over the slot 22s between the second antenna first and second parts 22a, 22b.

With the above configuration according the first variation, in addition to the advantages of the first embodiment, the area in which the first antenna 21 faces the second antenna 22, that is, the electrical juncture area therebetween is increased. This enables an extension of the communication distance between the reader/writer (not shown) and the radio IC tag 2T.

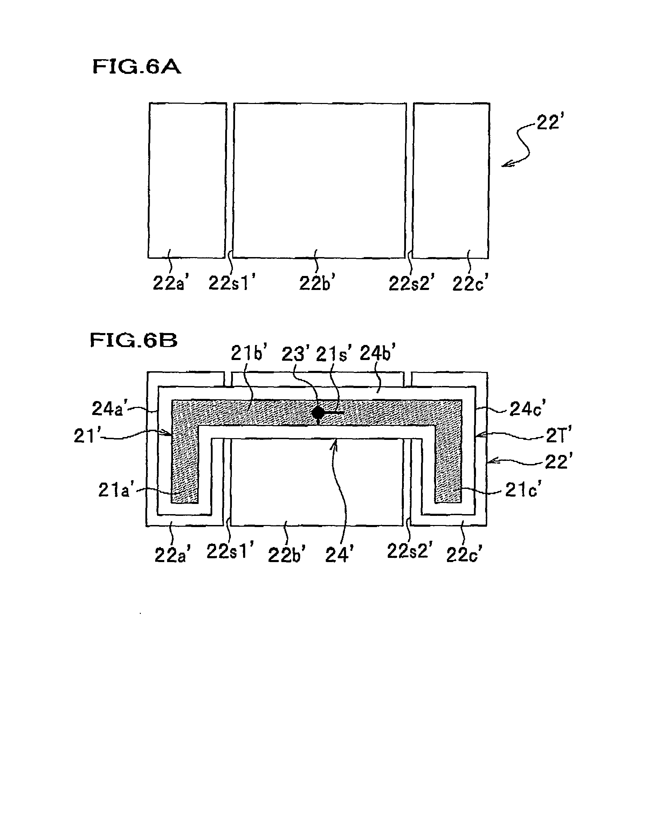

FIGS. 6A and 6B are views each illustrating a still another example according to the first variation of the first embodiment, in which the slot 22s shown in FIGS. 5A and 5B is modified. FIG. 6A is a plan view illustrating a second antenna 22' according to the still another example of the first variation of the first embodiment. FIG. 6B is a view in the direction of the arrow B in FIG. 1B according to the still another example of the first variation of the first embodiment.

As shown in FIG. 6A, in the still another example of the first variation of the first embodiment, a slot 22s2' is additionally formed in the second antenna 22'. That is, slots 22sl' and 22s2' are formed at both ends of the second antenna 22' . Preferably, but not necessarily, the slots 22s1' and 22s2' are formed symmetrically or substantially symmetrically.

With the above configuration, the second antenna 22' is divided into a second antenna first area 22a' and a second antenna second area 22b' across the 22sl' and is also divided into the second antenna second area 22b' and a second antenna third area 22c' across the 22s2'.

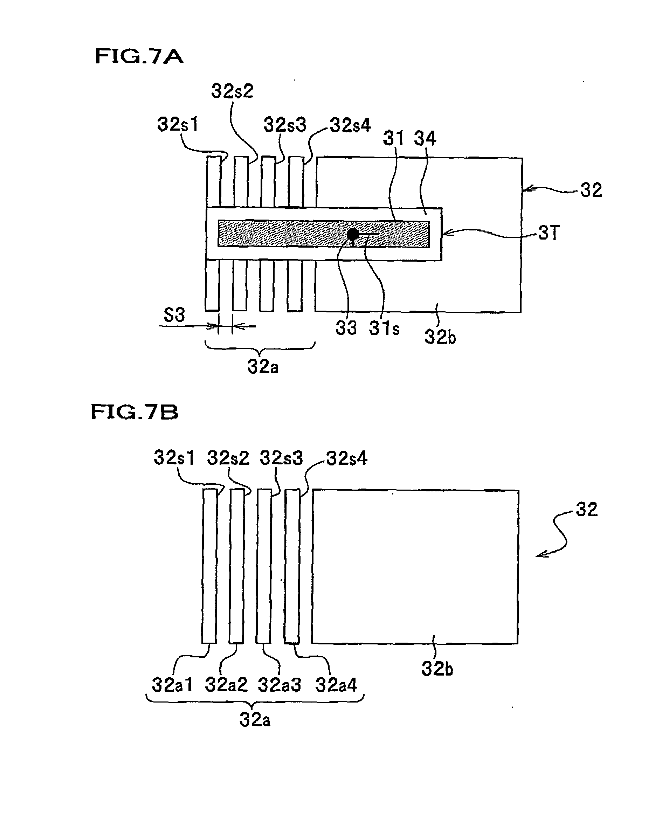

As shown in FIG. 6B, the first antenna first area 21a' of the first antenna 21' is formed in a shorter direction of the second antenna 22' (see FIG. 7A) and is arranged to face the second antenna first area 22a' . The first antenna second area 21b' which is adjacent to the first antenna first area 21a' is formed in a longitudinal direction of the second antenna 22' (see FIG. 7A) and is arranged to face the second antenna first, second, and third areas 22a', 22b', 22c'. The first antenna third area 21c' which is adjacent to the first antenna second area 21b' is formed in the shorter direction of the second antenna 22' (see FIG. 7A) and is arranged to face the second antenna third area 22c'.

Herein, an IC chip 23' of the radio IC tag 2T' and an L-shaped slit 21s' (impedance matching circuit) of the first antenna 21' are arranged such that the IC chip 23' and the L-shaped slit 21s' are not placed over the slots 22sl', 22s2' between the second antenna first, second, and third areas 22a', 22b', 22c'.

With the above configuration of the still another example of the first variation, the slots 22s1', 22s2' are formed near the both ends of the second antenna 22'. This enables an increase in the length of the second antenna 22. That is, the lengths in respective longitudinal directions of the second antenna first, second, third areas 22a', 22b', 22c', are increased, thus extending the communication distance.

Further, the slots 22s1', 22s2' are formed symmetrically or substantially symmetrically positioned with respect the second antenna 22'. This prevents the slots 22s1', 22s2' from being clearly recognized and improves designing.

If a length of the second antenna 22' is predetermined, a size of the second antenna 22' with the configuration can be made smeller, thus expanding applicability.

For example, if the second antenna 22' is made of a hologram seal, the hologram seal used can be made smaller, thus expanding applicability.

Moreover, the longer second antenna 22' and the communication distance can make second antenna 22' smaller, which allows an assembly with the configuration more compact.

The still another example of the first variation describes the configuration in which the second antenna 22' is divided into the second antenna first, second, third areas 22a', 22b', 22c'. However, another configuration is also possible in which the second antenna first area 22a' is partly joined to the second antenna second area 22b', and/or the second antenna second area 22b' is partly joined to the second antenna third area 22c'.

### <Second Variation of First Embodiment>

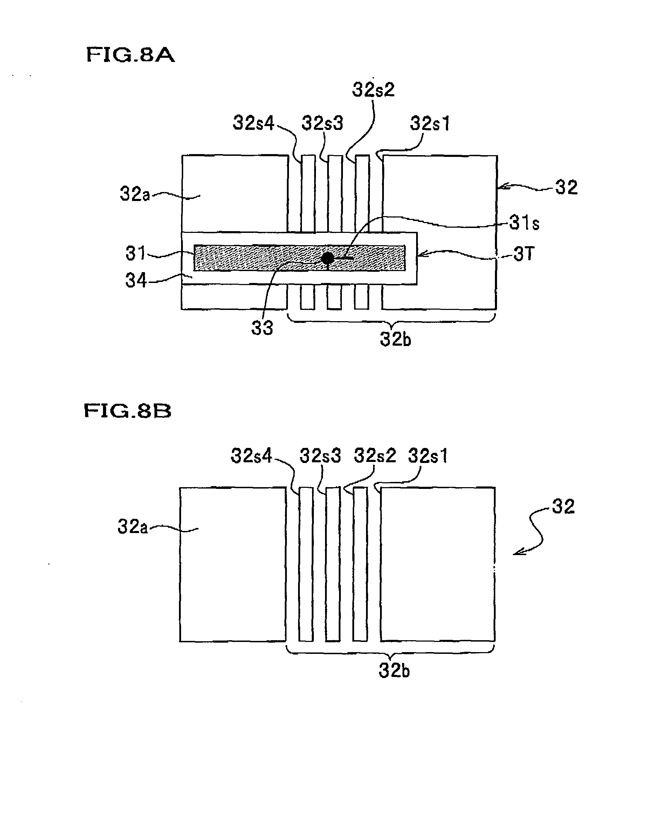

Next is described a second variation according to the first embodiment with reference to FIGS. 7A, 7B, 8A, and 8B.

FIG. 7A is a view in the direction of the arrow B in FIG. 1B according to the second variation of the first embodiment. FIG. 7B is a plan view illustrating a second antenna 32 of FIG. 7A.

The second variation has a configuration in which the slot 2s of the second antenna 2 according to the first embodiment (see FIG. 1) is changed to a plurality of slots 32sl, 32s2, 32s3, and 32s4 so as to be less recognizable.

Except the above-mentioned, a configuration of the second variation is similar to that of the first embodiment, and its detailed description is omitted herefrom.

As shown in FIG. 7B, in the second variation, a plurality of slots 32s1, 32s2, 32s3, are formed in a second antenna first part 32a. A slot 32s4 is further formed between the second antenna first part 32a and a second antenna second part 32b.

That is, the second antenna first part 32a is divided into a second antenna first area 32a1, a second antenna second area 32a2, a second antenna third area 32a3, and a second antenna fourth area 32a4.

As shown in FIG. 7A, a radio IC tag 3T is disposed facing the second antenna first part 32a and the second antenna second part 32b.

Larger widths s3 of the slots 32s1, 32s2, 32s3, 32s4, are electrically more advantageous, however, the widths s3 of about 100 µm are sufficient.

With the above configuration of the second variation, the slots 32s1, 32s2, 32s3 are formed also in the second antenna first part 32a. Thus, when a user sees the second antenna 32, the increased number of the slots 32s1, 32s2, 32s3, in a wider area reduces a contrast change in the second antenna 32, compared to a single slot. This makes the slots 32s1, 32s2, 32s3, less recognizable by the user and improves designing.

FIGS. 8A and 8B each show another example of the second variation shown in FIGS. 7A and 7B, in which positions of the slots 32s1, 32s2, 32s3 of FIGS. 7A and 7B are modified. FIG. 8A is a view in the direction of the arrow B in FIG. 1B according to another example of the second variation of the first embodiment. FIG. 8B is a plan view illustrating a second antenna 32 of FIG. 8A.

In another example of the second variation shown in FIGS. 8A and 8B, the slots 32s1, 32s2, 32s3 are formed in the second antenna second part 32b, instead of the second antenna first part 32a.

Except the above-mentioned, a configuration of another example is similar to that of the second variation of the first embodiment, and its detailed description is omitted herefrom.

Note that, in the first embodiment described above, the product P made of resin demonstrates better communication performance of than the product P made of metal. It is estimated that this is because the slot 2s of the second antenna 2 is opened at both ends thereof, and the second antenna 2 is divided into two.

### <<Second Embodiment>>

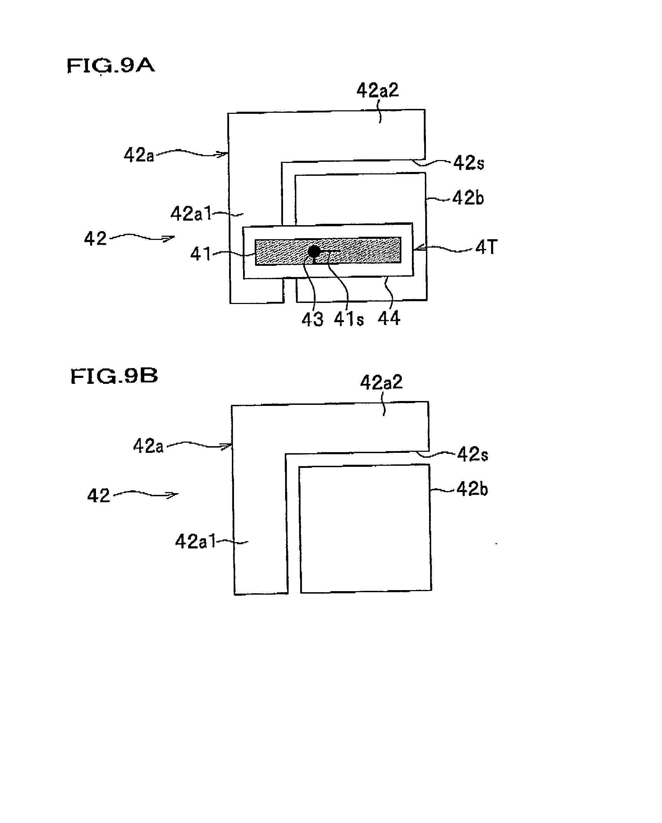

Next is describe a second embodiment with reference to FIGS. 9A and 9B.

FIG. 9A is a view in the direction of the arrow B in FIG. 1B according to the second embodiment. FIG. 7B is a plan view illustrating a second antenna 42 of FIG. 9A.

The second embodiment is configured to have the second antenna 42, for example, in a substantial square shape when viewed from the top, because a hologram often used is in an elliptical shape.

Except the above-mentioned, a configuration of the second embodiment is similar to that of the first embodiment, and its detailed description is omitted herefrom.

As shown in FIG. 9B, in the second embodiment, the second antenna 42 has a substantially square shape as a whole and is divided into a substantially L-shaped second antenna first part 42a and a substantially square-shaped second antenna second part 42b via a slot 42s extending in a substantial L shape.

The substantially L-shaped second antenna first part 42a includes a second antenna first part first area 42a1 and a second antenna first part second area 42a2, combination of which forms an L shape.

As shown in FIG. 9A, a radio IC tag 4T is attached to the second antenna 42 such that: a first antenna 41 of the radio IC tag 4T is placed on the second antenna 42; and an IC chip 43 of the radio IC tag 4T and an L-shaped slit 41s of the first antenna 41 are positioned not over the substantially L-shaped slot 42s of the second antenna 42.

That is, the IC chip 43 of the radio IC tag 4T and the L-shaped slit 41s of the first antenna 41 are arranged vertically displacing the substantially L-shaped slot 42s and facing the second antenna 42.

### <Advantages>

With the configuration according to the second embodiment, an assembly having an assembling structure of the radio IC tag 4T forms a substantial square, thus allowing a hologram which often has an elliptical shape to be used as a second antenna.

Further, with the configuration, the slot 42s has a substantial L shape and a length thereof in a longitudinal direction is well secured along the substantial L shape. If the second antenna 42 is being operated in the slot mode, a long communication distance of the radio IC tag 4T can be realized because the slot 42s opens long.

Or, if the second antenna 42 is being operated in the dipole mode, the second antenna 42 becomes more efficient with a longer dipole antenna. This is because: the second antenna 42a has the substantial L shape; a length thereof in the longitudinal direction can be well obtained along the substantial L shape; and a sufficient length of the second antenna 42 as a whole can be secured.

In FIGS. 9A and 9B, a configuration is described in which the second antenna 42 includes the substantially square-shaped second antenna second part 42b and the substantially L-shaped second antenna first part 42a surrounding the second antenna second part 42b. However, the configuration is not limited to this. Any other configuration is possible as long as the second antenna first part 42a surrounds a portion of a circumference of the second antenna second part 42b via the slot 42s (which may also be referred to as a second gap).

### <First Variation of Second Embodiment>

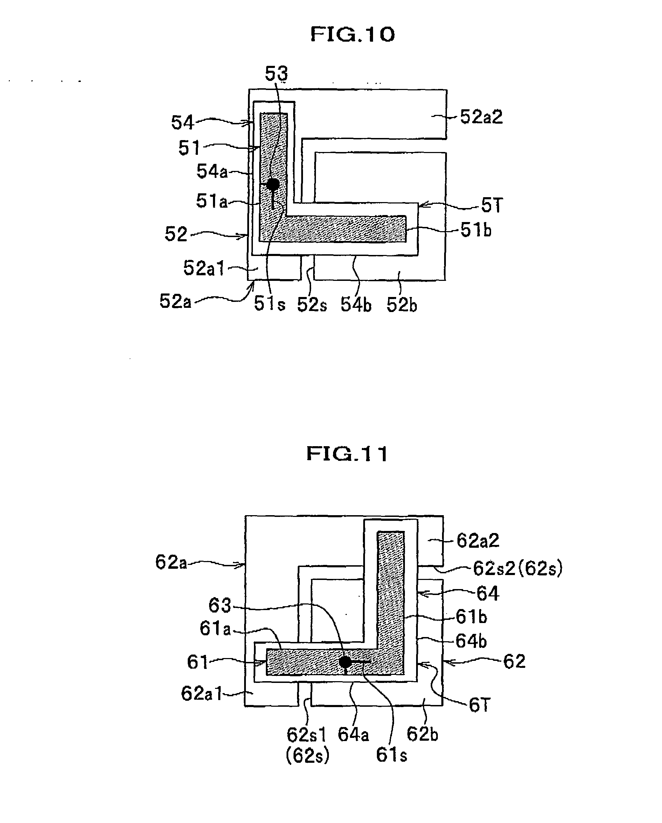

Next is described a first variation of the second embodiment with reference to FIG. 10.

FIG. 10 is a view in the direction of the arrow B in FIG. 1B according to the first variation of the second embodiment.

In the first variation of the second embodiment, an area in which a second antenna 52 faces a first antenna 51 of a radio IC tag 5T is increased so as to increase an electrical junction area of the second antenna 52 and the first antenna 51.

Except the above-mentioned, a configuration of the first variation is similar to that of the second embodiment, and its detailed description is omitted herefrom.

The second antenna 52 (including a second antenna first part 52a and a second antenna second part 52b) of the first variation of the second embodiment has a configuration same as the second antenna 42 of the second embodiment.

As shown in FIG. 10, a base material 54 of a radio IC tag 5T has a substantial L shape and includes, via a slot 52s, a base material first part 54a substantially facing the second antenna first part 52a, and a base material second part 54b substantially facing the second antenna second part 52b.

The first antenna 51 mounted on the base material 54 has a shape contouring the substantially L-shaped base material 54. The first antenna 51 includes: an antenna first area 51a mounted on the base material first part 54a; and an antenna second area 51b mounted on the base material second part 54b.

With the above configuration, the antenna first area 51a of the first antenna 51 can be disposed substantially facing the second antenna first part 52a; and the antenna second area 51b of the first antenna 51 can be disposed substantially facing the second antenna second part 52b.

As described above, the first antenna 51 of the radio IC tag 5T is placed over the second antenna 52. Further, an IC chip 53 of the radio IC tag 5T and an L-shaped slit 51s of the first antenna 51 are arranged not facing or being placed over the substantially L-shaped slot 52s of the second antenna 52.

With the configuration of the first variation of the second embodiment, the area in which the second antenna 52 faces the first antenna 51 of the radio IC tag 5T is increased, and the electrical juncture area therebetween is increased. That is, an electrical juncture therebetween is enhanced. This enables an extension of a communication distance of the radio IC tag 5T.

### <Second. Variation of Second Embodiment>

Next is described a second variation of the second embodiment with reference to FIG. 11.

FIG. 11 is a view in the direction of the arrow B in FIG. 1B according to the second variation of the second embodiment.

The second variation of the second embodiment has a configuration in which shapes and arrangements of a first antenna 61 and a second antenna 62 make it possible for a reader/writer (not shown) equipped with only a linear polarized antenna to read information recorded in a radio IC tag 6T from two directions at right angles to each other.

Except the above-mentioned, a configuration of the second variation is similar to that of the second embodiment, and its detailed description is omitted herefrom.

The second antenna 62 (including a second antenna first part 62a and a second antenna second part 62b) according to the second variation of the second embodiment has a configuration similar to that of the second antenna 42 according to the second embodiment.

As shown in FIG. 11, a base material 64 of the radio IC tag 6T has a substantial L shape and includes, via a slot 62s, a base material first part 64a substantially facing the second antenna first part first area 62a1 and the second antenna second part 62b, and a base material second part 64b facing a second antenna first part second area 62a2 and the second antenna second part 62b.

The first antenna 61 is substantially L-shaped having a substantial right angle and contouring the substantially L-shaped base material 64. The first antenna 61 includes: a first antenna first area 61a mounted on the base material first part 64a; and a first antenna second area 61b mounted on the base material second part 64b, combination of which forms a substantial L shape.

The first antenna first area 61a of the first antenna 61 is arranged facing the second antenna first part first area 62a1 and the second antenna second part 62b. The first antenna second area 61b of the first antenna 61 is arranged facing the second antenna first part second area 62a2 and the second antenna second part 62b.

Further, the first antenna first area 61a of the first antenna 61 is faced to and placed over a slot first area 62s1 (which may also be referred to as a second gap first area) of the substantially L-shaped slot 62s of the second antenna 62. The first antenna second area 61b of the first antenna 61 is faced to and placed over a slot second area 62s2 (which may also be referred to as a second gap second area) of the slot 62s of the second antenna 62.

As described above, the first antenna 61 of a radio IC tag 6T is placed over the second antenna 62. Further, an IC chip 63 of the radio IC tag 6T and an L-shaped slit 61s of the first antenna 61 are arranged not vertically facing or being placed over the substantially L-shaped slot 62s of the second antenna 62.

With the configuration according to the second variation of the second embodiment, the first antenna 61 of the radio IC tag 6T is substantially L-shaped having a substantially right angle and crosses the second antenna 62 and the slot 62s in the second antenna 62. This enables a reader/writer (not shown) equipped with a linear polarized antenna to read information recorded in the radio IC tag 6T from two directions at right angles to each other.

### <<Third Embodiment>>

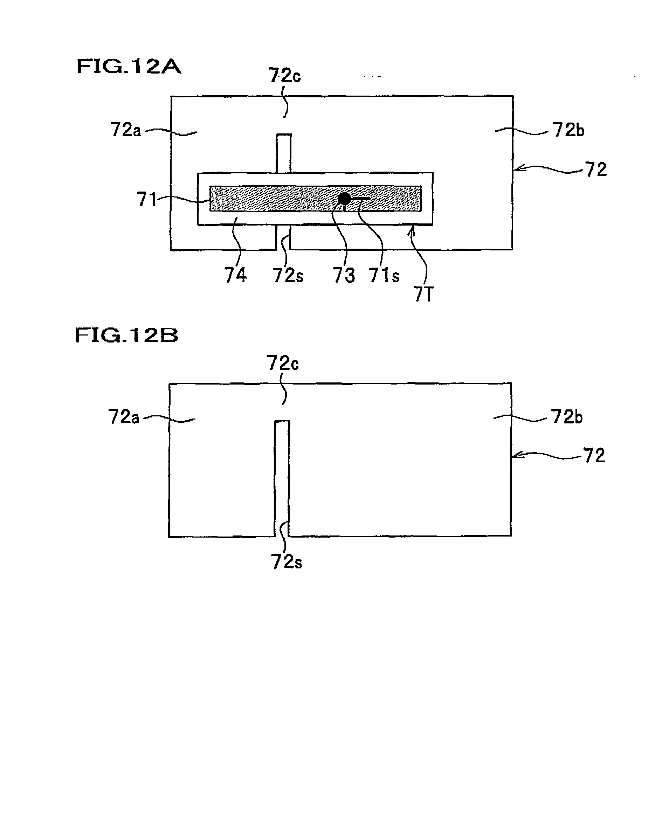

Next is described a third embodiment with reference to FIGS. 12A and 12B.

FIG. 12A is a view in the direction of the arrow B in FIG. 1B according to the third embodiment. FIG. 12B is a plan view illustrating a second antenna 72 of FIG. 12A.

The third embodiment has a configuration in which the second antenna first and second parts 2a, 2b, according to the first embodiment are unitarily formed.

Except the above-mentioned, the configuration of the third embodiment is similar to that of the first embodiment, and its detailed description is omitted herefrom.

As shown in FIG. 12A and FIG. 12B, the second antenna 72 according to the third embodiment includes a second antenna first area 72a, a second antenna second area 72b, and a second antenna third area 72c. The second antenna first area 72a and the second antenna second area 72b are disposed across a slot 72s. The second antenna third area 72c is an area which does not face the radio IC tag 7T. The second antenna first area 72a and the second antenna second area 72b are unitarily formed via the second antenna third area 72c.

As shown in FIG. 12A, the first antenna 71 is faced to and is placed over the second antenna 72. Further, an IC chip 73 of the radio IC tag 7T and a L-type slit 71s of the antenna 71 are arranged without facing to and being positioned over the slot 72s of the second antenna 72.

### <Advantages>

With the configuration of the third embodiment, in addition to the advantages of the first embodiment, the radio IC tag 7T can fulfill its functions even if the product P to which the radio IC tag 7T is attached is made of either resin or metal. This is because the second antenna 72 is configured as a single unit via the second antenna third area 72c, which enhances a function of the dipole mode.

### <First Variation of Third Embodiment>

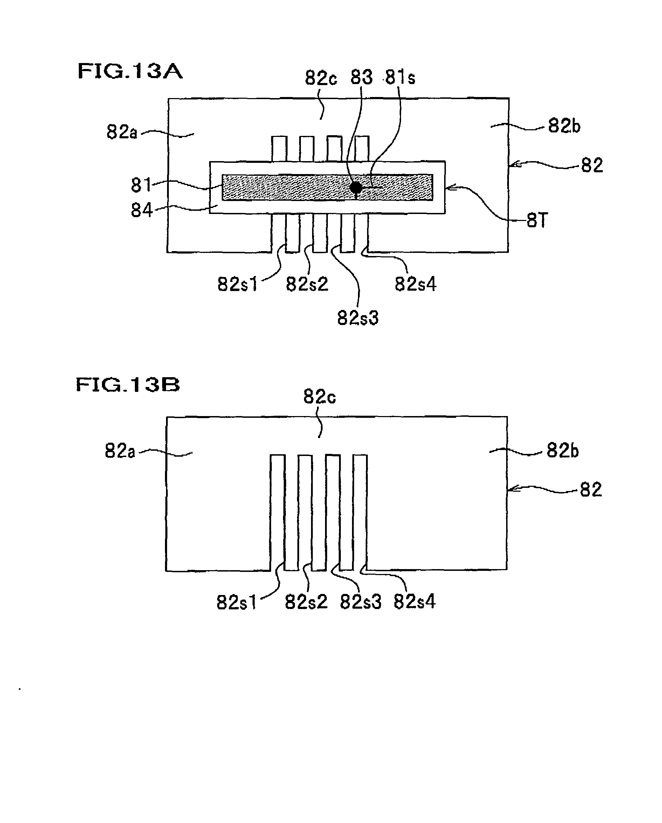

Next is described a first variation of the third embodiment with reference to FIGS. 13A and 13B.

FIG. 13A is a view in the direction of the arrow B in FIG. 1B according to the first variation of the third embodiment. FIG. 13B is a plan view illustrating a second antenna 82 of FIG. 13A.

The first variation of the third embodiment has a configuration in which the slot 72s (see FIG. 12) of the second antenna 72 according to the third embodiment is changed to a plurality of slots 82s1, 82s2, 82s3, 82s4, so as to be less recognizable.

Except the above-mentioned, a configuration of the first variation is similar to that of the third embodiment, and its detained description is omitted herefrom.

As shown in FIG. 13B, in the first variation, a plurality of slots 82s2, 82s3, 82s4 are formed in a second antenna second area 82b of the second antenna 82, in addition to a slot 82s1 which is similar to the slot 72s1 according to the third embodiment.

The second antenna 82 includes a second antenna first area 82a, the second antenna second area 82b, and a second antenna third area 82c. The second antenna first area 82a and the second antenna second area 82b are unitarily formed via the second antenna third area 82c which is disposed in a position without vertically facing the radio IC tag 8T.

With the above configuration of the first variation, the slots 82s2, 82s3, 82s4 are formed in the second antenna 82. Thus, when a user sees the second antenna 82, the increased number of the slots 82s2, 82s3, 82s4, in a wider area reduces a contrast change in the second antenna 82, compared to a single slot. This makes the slots 82s2, 82s3, 82s4, less recognizable by the user and improves designing.

### <<Fourth Embodiment>>

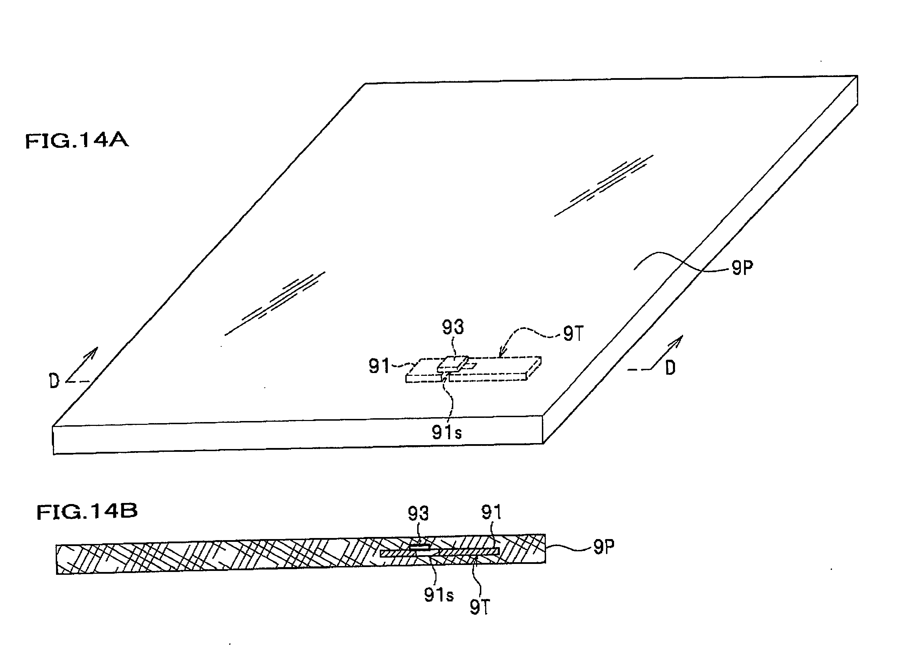

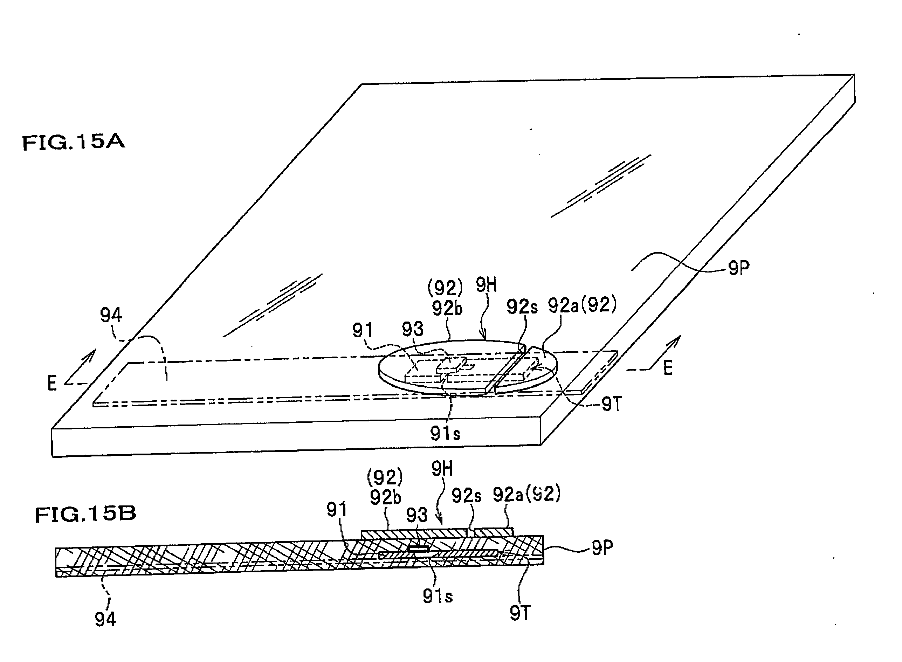

Next is described a fourth embodiment with reference to FIGS. 14A, 14b, 15A, and 15B.

FIG. 14A is a perspective view illustrating an IC chip medium 9P with a radio IC tag 9T embedded therein according to the fourth embodiment. FIG. 14B is a cross sectional view illustrating the radio IC tag T when cut along the line D-D of FIG. 14A.

FIG. 15A is a perspective view illustrating another IC chip medium 9P, such as a sheet of paper, with the radio IC tag 9T shown in FIG. 14A embedded therein and with a hologram 9H as a second antenna 92 disposed facing the IC chip medium 9P. FIG. 15B is a cross sectional view illustrating the radio IC tag T when cut along the line E-E of FIG. 15A.

The fourth embodiment has a configuration in which the hologram 9H as the second antenna 92 is arranged facing the medium 9P such as a sheet of paper with the radio IC tag 9T embedded therein.

As shown in FIG. 14A and FIG. 14B, the radio IC tag 9T with information recorded therein is embedded in the medium 9P such as an important document and a certificate so as to prevent forgery, manage security, or the like.

As shown in FIG. 15A and FIG. 15B, the hologram 9H (made of a hologram seal or hologram foil) as the second antenna 92 is attached onto a surface of the medium 9P. The medium 9P is a sheet of paper 150 µm thick and is equipped with the radio IC tag 9T which is embedded therein beforehand in the paper forming process. The hologram 9H is attached to the medium 9P such that the second antenna 92 (including a second antenna first part 92a and a second antenna second part 92b) is positioned vertically above a first antenna 91 of the radio IC tag 9T.

As shown in FIG. 15B, the medium 9P made of paper such as an important document and a certificate serves as an insulating layer between the first antenna 91 of the radio IC tag 9T and the hologram 9H as the second antenna 92.

If the hologram 9H as the second antenna 92 is a hologram seal, an adhesive layer is formed on an under surface of the hologram 9H, with which the hologram 9H is firmly fixed to the medium 9P.

Alternatively, if the hologram 9H is made of hologram foil, the foil-processed hologram 9H is fixed to a sheet of paper or the like with thermo compression bonding.

In other words, the radio IC tag 9T may be equipped in the product P by embedding a piece equipped with the IC chip 93 in the first antenna 91 formed on a base material in the paper forming process (see FIGS. 14A and 14B) or by inserting a piece equipped with the IC chip 93 between more than two sheets of paper (the product 9P).

Additionally, the radio IC tag 9T may be equipped in the product P at high speed by using a thread 94 (see FIGS. 15A and 15B) with the radio IC tags 9T arranged thereon when embedding the radio IC tag 9T (see FIGS. 14A and 14B) in the paper forming process. The thread with the radio IC tags 9T is prepared by using a tape-shaped thread made of resin or paper having a width of 2 to 5 mm and successively arranging the radio IC tags 9T on the thread at desired intervals. In this case, a base material 94 of the radio IC tag 9T (indicated with a alternate long and two short dashes line in FIG. 15B) serves as a material for the thread.

The prepared tape-shaped thin thread equipped with the radio IC tag 9T having the IC chip 93 and the first antenna 91 is embedded in the medium 9P in the paper forming process or inserted between more than two sheets of paper as the medium 9P.

### <Advantages>

With the fourth embodiment, the hologram 9H is arranged facing the radio IC tag 9T embedded in the medium 9P. This allows a metal evaporated layer of the hologram 9H to be used as the second antenna 92.

Therefore, information recorded in the radio IC tag 9T can prevent forgery of the medium 9P such as an important document and a certificate. The hologram 9H also has such a forgery preventive property. Moreover, the hologram 9H can add a decorative appearance to the medium 9P.

Further, if the hologram 9H is made of hologram foil, the hologram foil is too thin to be easily removed, which enhances forgery prevention effect.

The configurations according to the first to fourth embodiments and their variations are described above individually. However, any appropriate combination thereof is also possible, and advantages resulting from the combination can be obtained.

Description of the embodiments of the present invention has been made assuming that the product P is made of metal or resin and the medium 9P is made of paper such as an important document and a certificate. However, the present invention can be applied to any other solid material.

In the first to fourth embodiments, description has been made assuming that the radio IC tag is a read-only radio IC tag. However, the present invention can be applied to a readable and writable radio IC.

Various dimensions provided in the embodiments, such as widths of the slots are only by way of examples, and the present invention is not limited to those.

The embodiments according to the present invention have been explained as aforementioned. However, the embodiments of the present invention are not limited to those explanations, and those skilled in the art ascertain the essential characteristics of the present invention and can make the various modifications and variations to the present invention to adapt it to various usages and conditions without departing from the spirit and scope of the claims, as interpreted by the description and drawings.

## Claims

1. An assembling structure of a radio IC tag, the radio IC tag comprising an IC chip for recording information therein and a first antenna connected to the IC chip for wirelessly transmitting or receiving the information,
wherein the first antenna has a first gap for performing impedance matching, and
wherein a conductive second antenna having a second gap is placed over the IC chip, the first gap, and the first antenna.

2. The assembling structure of the radio IC tag according to Claim 1,
wherein the second antenna is divided into at least two parts or is divided except a connecting portion via the second gap.

3. The assembling structure of the radio IC tag according to Claim 1 or Claim 2, wherein a plurality of the second gaps are created.

4. The assembling structure of the radio IC tag according to Claim 2, wherein the second antenna is formed by one of the two divided parts of the second antenna and the other, and a portion of a circumference of the other divided part is surrounded by the one divided part.

5. The assembling structure of the radio IC tag according to any one of Claims 1 to 4, wherein the first antenna has a shape other than a straight line so as to increase an area in which the first antenna faces the second antenna.

6. The assembling structure of the radio IC tag according to Claim 4 or Claim 5,
wherein the second gap in the second antenna has a second gap first area and a second gap second area which extend at substantially right angles to each other, and
wherein the first antenna is placed over the second gap first area, the second gap second area, and the second antenna.

7. The assembling structure of the radio IC tag according to any one of Claims 1 to 6,
wherein the radio IC tag is arranged inside or outside of a medium to be managed by the radio IC tag, and
wherein the second antenna is a metal evaporated film of a hologram.

8. The assembling structure of the radio IC tag according to any one of Claims 1 to 7, wherein the second antenna is disposed on a side of the radio IC tag to be seen by a user.

9. The assembling structure of the radio IC tag according to Claim 7 or Claim 8, wherein portions of the metal evaporated film of the hologram as the second antenna are formed irregularly at angles with respect to an extending surface of the hologram.

10. The assembling structure of the radio IC tag according to any one of Claims 7 to 9, wherein the medium to be managed by the radio IC tag is a medium made of paper.

11. The assembling structure of the radio IC tag according to any one of Claims 1 to 10, wherein the second gaps are created just beside the both ends of the second antenna.

12. The assembling structure of the radio IC tag according to Claim 11, wherein the second gaps are created symmetrically or substantially symmetrically in the second antenna.
